# EUROPEAN PATENT APPLICATION

(11) **EP 2 254 392 A2**
(43) Date of publication of application: **24.11.2010**
(21) Application number: 09176496.9
(22) Date of filing: 19.11.2009
(51) Int. Cl.: H05B 33/08

(54) **AC LED module with an improved power factor**

(30) Priority: 22.05.2009 TW 98117007
(71) Applicant: Advanced Connectek Inc., Taipei Hsien Hsin-Tien (TW)
(72) Inventor: Cheng, Ching-Chi, Hsin-Tien (TW); Chien, Wen-Hsiang, Hsin-Tien (TW)
(74) Representative: Viering, Jentschura & Partner

(57) **Abstract**

An AC LED module with an improved power factor for coupling with an AC source includes a plurality of LED strings and a plurality of connecting-to-middle drive elements. The LED strings are coupled in parallel between two ends of the AC source, and each of the LED strings further includes a respective number of LEDs connected in series. The connecting-to-middle drive element assigned to a respective LED string has two connection point, one connected to one end of the AC source while another being connected with a middle point between two consecutive LEDs in the same LED string.

## Description

This application claims the benefit of Taiwan Patent Application Serial No.098117007, filed May 22, 2009, the subject matter of which is incorporated herein by reference.

### BACKGROUND OF THE INVENTION

### (1) Field of the Invention

The invention relates to an AC (alternative current) LED (light emitting diode) module, more particularly to the AC LED module that parallels a plurality of LED strings to obtain an improved power factor from a sinusoidal current input.

### (2) Description of the Prior Art

Due to energy shortage, it is a trend of the current industry society to emerge high efficient and low energy-consumption products. In the illustration industry, LEDs presenting various merits in high energy transformation, quick response, high flicker frequency, long service life and energy saving have become the mainstream products for the next-generation illumination tools.

The AC LED powered directly by alternative current is an obvious solution for most of the conventional AC illumination equipments. By compared to the DC (direct current) LED powered only by DC, the AC LED features in low heat generation and energy saving by 15∼30%. Therefore, the gain in carbon reduction by replacing the conventional illumination parts with the AC LEDs is easy to see.

For the LED light is one of the semiconductor sources, it is well known that the LED is usually driven by the DC source. To make the LED able to be driven by the AC source, following resorts are usually seen.

1. Apply an AC/DC converter to the AC source, such that the AC power can be converted into the DC power. In particular, a transformer can be introduced between the converter and the LED or the driver IC.

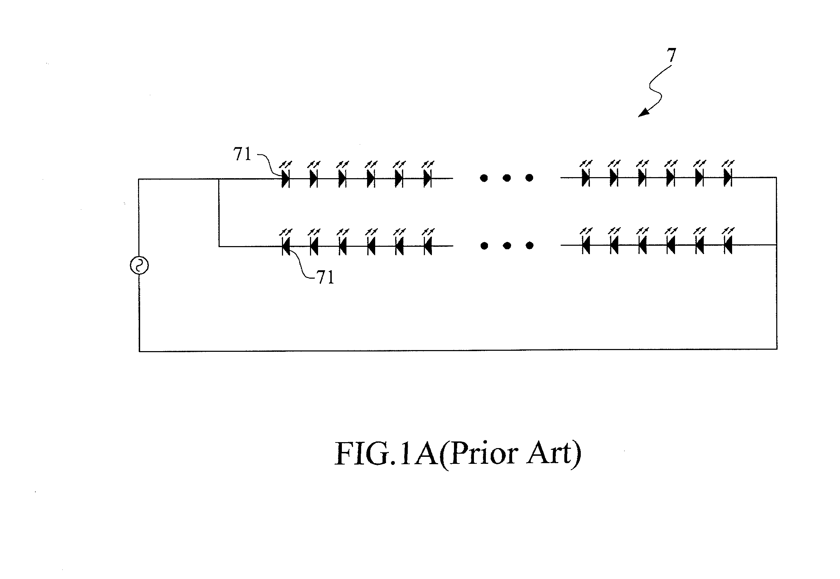

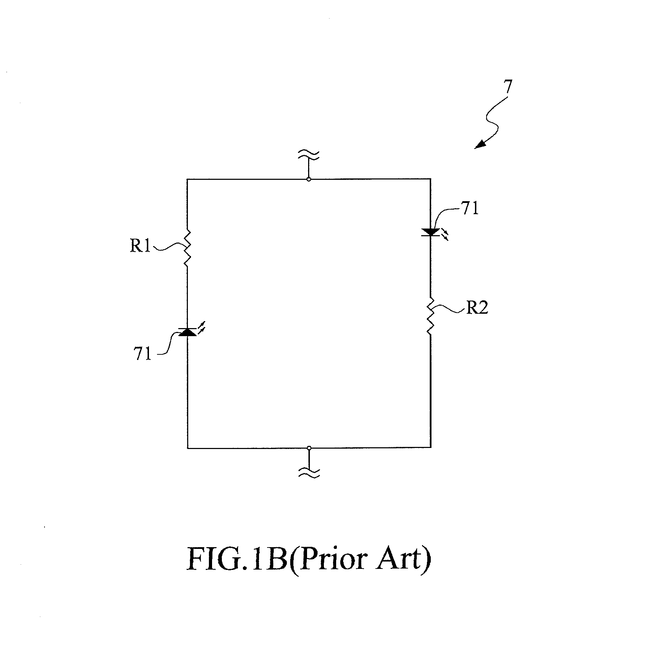

2. Use parallel strings of LEDs with inverted polar directions to form the LED device. Refer to FIG.1A, the LED device 7 is consisted of two LED strings that present different polar directions, in which each of the LED strings include LEDs 71 with an identical polar direction. Further refer to FIG.1B, in which each of the LED strings contains only an LED 71 but serially connected with a resistor R1 or R2 to share the power contributed by the AC source.

3. Introduce a bridge rectifier to couple the LED strings and/or a simple electrical component (for example, a resistor) serially connected with the LED strings.

4. Integrate the bridge rectifier by plural LEDs. Also, in the rectifier, a relevant resistor can be added in front thereof to share the voltage load.

Regarding the aforesaid resort 1, in the art, due to the volume and the weight of the conventional transformer, the manufacture cost and substantial electricity loss during operation make the conventional transformer less competitive, compared to modem illumination products. On the other hand, regarding the aforesaid resort 2 that applies two opposing LED strings to smooth out the illumination fluctuation caused by the AC source, it is obvious that the design by adding more components can definitely hike the product price.

Further, to any of the improvements provided from the aforesaid resort 1 to resort 4, the power factor can only reach a digit between 0.8 and 0.9, which is out of demands from a modem illumination gear that usually requires the power factor higher to 0.9.

Therefore, it is easy to see that the power factor provided by current AC LED circuits is never satisfied. An improvement thereupon for the AC LED circuitries is definitely needed and welcome to the skill person in the relative art.

### SUMMARY OF THE INVENTION

Accordingly, it is an object of the present invention to provide an AC LED module with an improved power factor.

In the present invention, the AC LED module is connected electrically to an AC source through a bridge rectifier unit. The AC source further has a first output port and a second output port. The AC LED module includes a plurality of drive components and a plurality of LED strings. Each of the LED strings is a combination of plural LEDs connected in series.

The bridge rectifier unit composed of a plurality of diodes for rectifying an AC from the AC source includes two input nodes, a first output node and a second output node, where both the input nodes are coupled respectively with the first output port and the second output port of the AC source. Drive elements such as constant current diodes, capacitors and/or a combination of any aforesaid element associated with relevant inductors and resistors can be coupled to either the first output node or the second output node. Each of the LED strings has two ends to couple in parallel with the bridge rectifier unit through the first and the second output ports, in which one of the ends is connected to at least one drive element, while another thereof is connected to the second output node. Particularly, a drive element is connected to a middle point within the LED string.

In the present invention, the bridge rectifier unit makes an AC source applicable to the LEDs, and the drive element stabilizes the voltage so as not to degrade the LEDs. Thereby, a satisfied power factor of the AC LED module in accordance with the present invention can be substantially ensured.

All these objects are achieved by the AC LED module with an improved power factor described below.

### BRIEF DESCRIPTION OF THE DRAWINGS

The present invention will now be specified with reference to its preferred embodiment illustrated in the drawings, in which:

FIG.1A is a schematic view of a conventional circuit including two LED strings in parallel but opposing polar directions;

FIG.1B is a schematic view of an LED module with parallel LEDs and resistors, in which the two LEDs shown therein are arranged in opposing polar directions;

FIG.2 is a schematic view of a circuit applying a first embodiment of the AC LED module in accordance with the present invention;

FIG.3 is a schematic view of a circuit applying a second embodiment of the AC LED module in accordance with the present invention;

FIG.4 is a schematic view of a circuit applying a third embodiment of the AC LED module in accordance with the present invention;

FIG.5 is a schematic view of a fourth embodiment of the AC LED module in accordance with the present invention;

FIG.6 is a schematic view of a fifth embodiment of the AC LED module in accordance with the present invention; and

FIG.7 shows a figure for explaining the relationship between the sinusoidal voltage wave and the illumination of LED strings.

### DESCRIPTION OF THE PREFERRED EMBODIMENT

The invention disclosed herein is directed to an AC LED module with an improved power factor. In the following description, numerous details are set forth in order to provide a thorough understanding of the present invention. It will be appreciated by one skilled in the art that variations of these specific details are possible while still achieving the results of the present invention. In other instance, well-known components are not described in detail in order not to unnecessarily obscure the present invention.

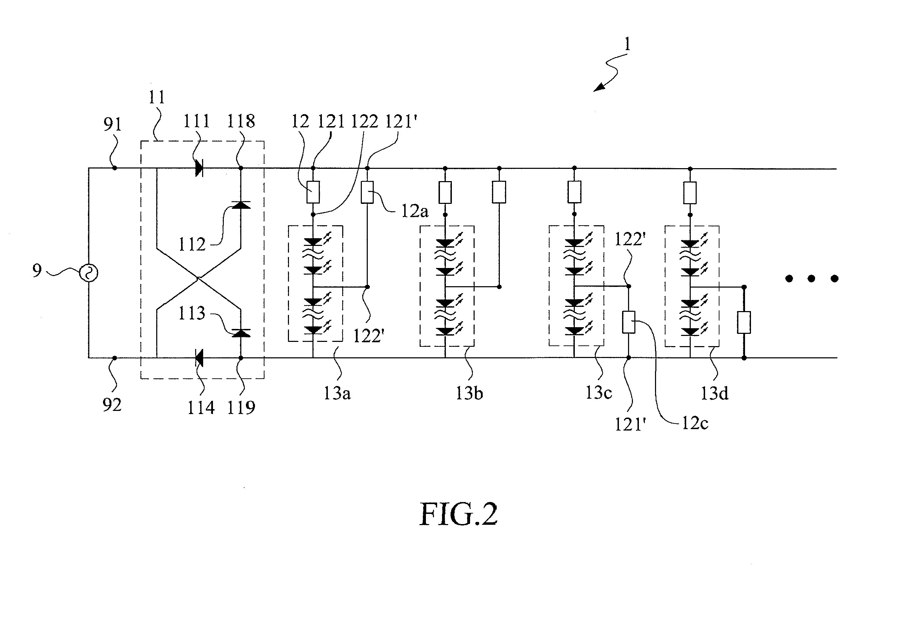

Referring now to FIG.2, a circuit applying a first embodiment of the AC LED module with an improved power factor in accordance with the present invention is partly schematically shown. The AC LED module 1 coupled with an AC source 9 through a bridge rectifier unit 11 includes a plurality of drive elements 12 and a plurality of LED strings 13. In the present invention, the drive element 12 can be a constant current diode, a capacitor, an IC or a combination of any aforesaid element associated with relevant inductors and resistors.

As shown, the AC source 9 has a first output port 91 at one end thereof and a second output port 92 at another end thereof.

The bridge rectifier unit 11 includes a plurality of diodes (four shown in the figure, 111-114) for rectifying an AC from the AC source 9. Among these four diodes 111-114, the positive pole of the first diode 111 is connected with the first output port 91 of the AC source, while the negative pole thereof is connected with the negative pole of the second diode 112. The positive pole of the second diode 112 is connected with both the second output port 92 of the AC source 9 and the negative pole of the fourth diode 114. The positive pole of the fourth diode 114 is connected with the positive pole of the third diode 113, while the negative pole of the third diode 113 is connected with the first output port 91 of the AC source and the positive pole of the first diode as well.

As shown, the connection point of the negative poles of the first diode 111 and the second diode 112 forms the first input node 118, while the connection point of the positive poles of the third diode 113 and the fourth diode 114 forms the second input node 119.

While in meeting a positive half sinusoidal-shape current output from the AC source 9, the first diode 111 and the fourth diode 114 are both at the ON state, while the second diode 112 and the third diode 113 are both at the OFF state; such that the outgoing current flows from the first output port 91, via the first diode 111 and the first input node 118, to the load (i.e. the AC LED module 1). At the same time, the incoming current flows away from the load from the second input node 119, via the fourth diode 114, back to the second output port 92 of the AC source 9.

On the other hand, while in meeting a negative half sinusoidal-shape current output from the AC source 9, the first diode 111 and the fourth diode 114 are both at the OFF state, while the second diode 112 and the third diode 113 are both at the ON state; such that the outgoing current flows from the second output port 92, via the second diode 112 and the first input node 118, to the load (i.e. the AC LED module 1). Simultaneously, the incoming current flows away from the load from the second input node 119, via the third diode 113, back to the first output port 91 of the AC source 9.

As shown in FIG.2, a first connection point 121 of the drive element 12 is connected with the first input node 118, while an opposing second connection point 122 of the same drive element 12 is connected to one end of the LED string 13a. Another end (the lower one in the figure) of the LED string 13a is connected to the second input node 119. In another drive element 12a, its first connection point 121' is also connected with the first input node 118 as well as the aforesaid first connection point 121, while its second connection point 122' is connected to a middle point within the LED string 13a.

In arranging a connecting-to-middle drive element 12c to the LED string 13c of FIG.2, the first connection point 121' is connected with the second input node 119, while the second connection point 122' is connected to a middle point within the LED string 13c.

In the present invention, the AC LED module 1 including parallel LED strings 13a, 13b, 13c, 13d and so on is parallel coupled with the bridge rectifier unit 11. Each of the aforesaid LED strings 13a, 13b, 13c or 13d is serially connected to the respective drive element 12 and coupled with the respective connecting-to-middle drive element 12a or 12c. In the present invention, every LED string 13a, 13b, 13c or 13d can have its own number of LEDs, and may arbitrarily arrange the middle point to connect the connecting-to-middle drive element within the string.

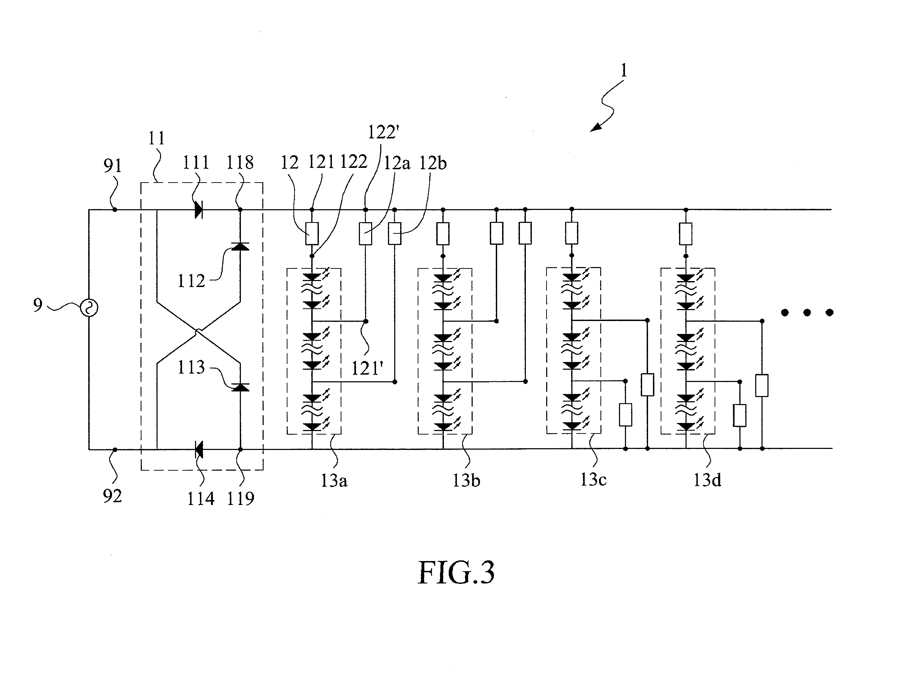

Referring now to FIG.3, a circuit applying a second embodiment of the AC LED module with an improved power factor in accordance with the present invention is partly schematically shown. Compared to the first embodiment shown in FIG.2, each of the LED strings 13a-13d shown in the figure is connected with three drive elements (say 12, 12a and 12b to the LED string 13a). The connection of the drive element 12 of FIG.3 is the same as that of the drive element 12 of FIG.2. The connection of either the drive element 12a or the drive element 12b of FIG.3 is resembled to that of the drive element 12a of FIG.2, except that the connecting-to-middle drive elements 12a and 12b are connected to different middle points of the LED string 13a.

As shown, the arrangement of the drive elements in the LED strings 13c and 13d is the same as that of the drive elements in the LED strings 13c and 13d of FIG.2, except for the existence of a third drive element to each of the respective LED strings 13c and a3d in this second embodiment. It is noted that, in the LED string 13c or 13d of FIG.3, the third drive element is also included to connect with a distinct middle point by comparing to another connecting-to-middle drive element.

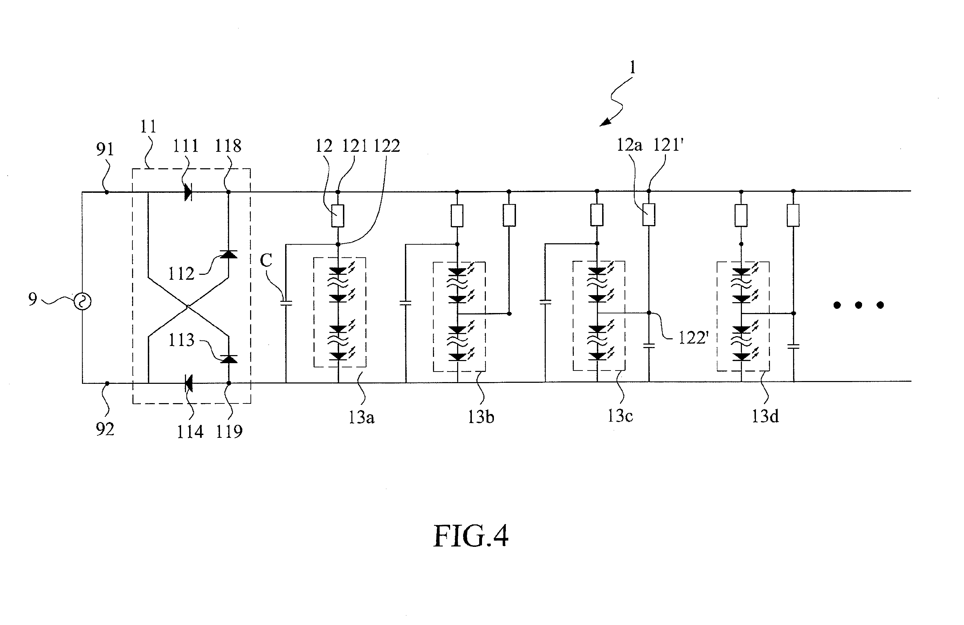

Referring now to FIG.4, a circuit applying a third embodiment of the AC LED module with an improved power factor in accordance with the present invention is partly schematically shown. Compared to the aforesaid two embodiments, the AC LED module 1 of this embodiment shown in FIG.4 is to include capacitors C to some LED strings. As shown, in either the LED strings 13a, 13b and 13c, a capacitor C is connected between the second connection node 122 of the drive element in series with the respective LED string and the second input node 119 of the bridge rectifier unit 11. Also, in either of the LED strings 13c and 13d, a capacitor is connected between the second input node 119 and the middle point 122' of the respective LED string for coupling the connecting-to-middle drive element.

In the present invention, the sinusoidal current originates at the AC source 9, then is rectified at the bridge rectifier unit 111, and finally is provided to the LED strings 13a, 13b, etc. in a parallel arrangement. Upon appropriate arrangements of various drive elements 12, 12a, etc. in the LED circuit, each of the LED strings 13a, 13b, etc. can illuminate properly according to any scale of voltage levels, i.e. at any state of the sinusoidal voltage provided by the AC source 9. Thereby, the power factor of the whole AC LED module can be substantially improved.

In the present invention, the number of LEDs for different LED strings may be different. Basically, the number of the LEDs in a specific LED string is determined upon user's demand. By providing the AC LED module of the present invention, the number of the LEDs in the same LED string that don't meet an illumination-threshold voltage can be reduced to a minimum, and thus the power factor of the module can be substantially maintained at a higher level.

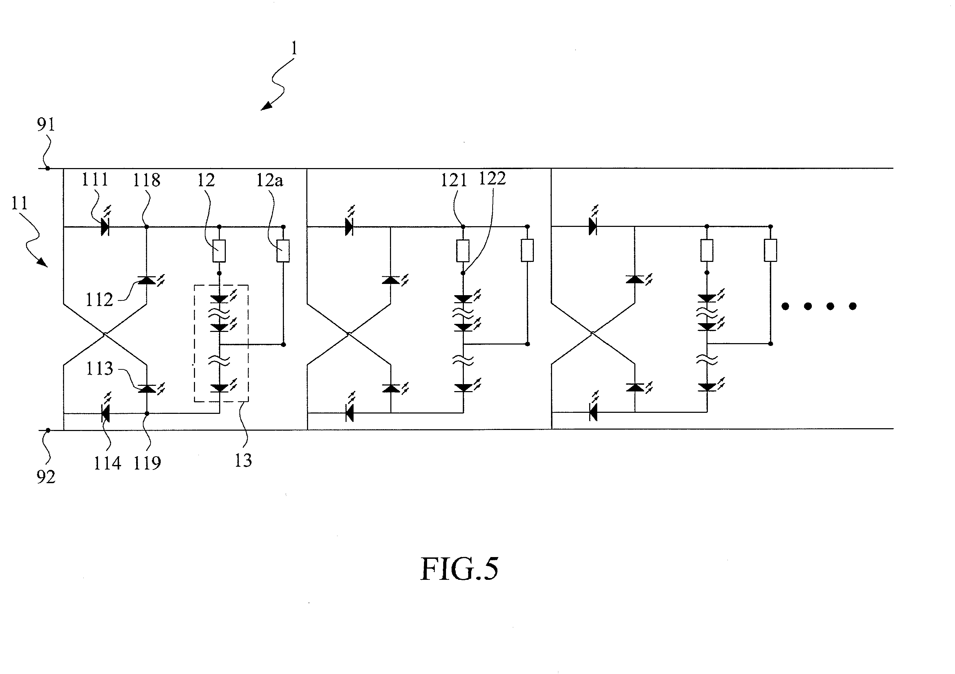

Referring now to FIG.5, a fourth embodiment of the AC LED module in accordance with the present invention is shown. In this embodiment, each combination of the drive elements 12, 12a and the respective LED string 13 is assigned with an exclusive bridge rectifier unit 11 to form a sub-module with two exterior connection ports at the bridge rectifier unit 11. All the sub-modules are connected in parallel and are coupled with the AC source via the first output port 91 and the second output port 92. It is easy to see that this embodiment can reduce the damage of the whole circuit resulted from a breakdown in any of the bridge rectifier units 11.

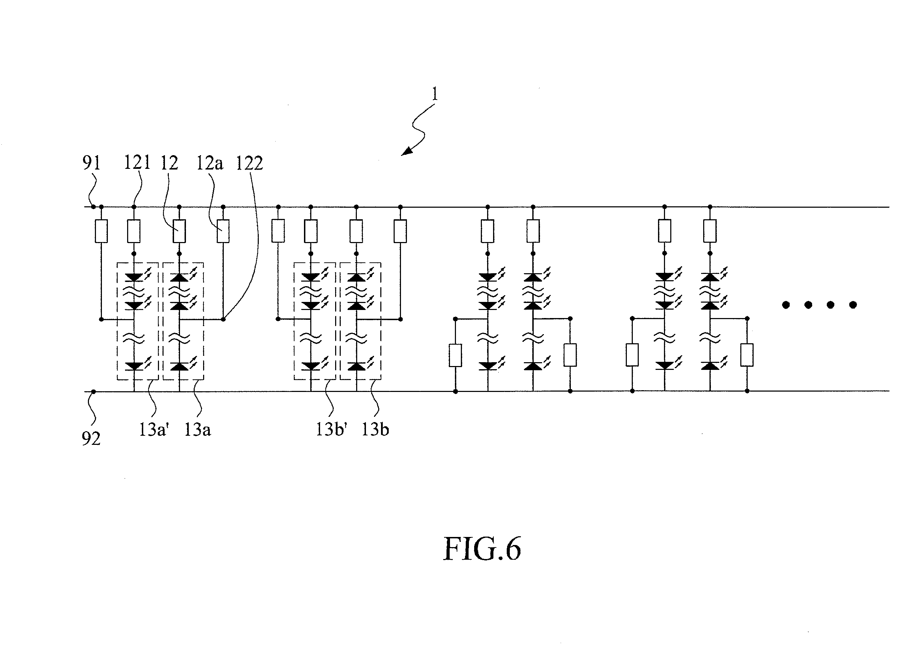

Referring now to FIG.6, a fifth embodiment of the AC LED module in accordance with the present invention is shown. In this embodiment, the module 1 does not include a bridge rectifier unit, but integrates in parallel a plurality of sub-modules. As shown, two kinds of sub-modules are included; one shown to the first leading two sub-modules, and another shown to the following two sub-modules. Both kinds of the sub-modules are coupled with the AC source via the first output port 91 and the second output port 92.

The first sub-module includes two LED strings 13a and 13a' arranged at opposing polar directions, and each of the two LED strings 13a and 13a' is accompanied by one in-serial drive element 12 and one connecting-to-middle drive element 12a. One end of the connecting-to-middle drive element 12a is connected with the first output port 91.

On the other hand, the second sub-module also includes two LED strings 13a and 13a' arranged at opposing polar directions, and each of the two LED strings 13a and 13a' is accompanied by one in-serial drive element 12 and one connecting-to-middle drive element 12a. However, one end of the connecting-to-middle drive element 12a is connected with the second output port 92.

As shown in FIG.6, no matter what half of the sinusoidal voltage wave is met, at least one (actually only one) LED string of each sub-module can be energized. Thereby, the illumination state of the LED module of FIG.6 can be constantly kept.

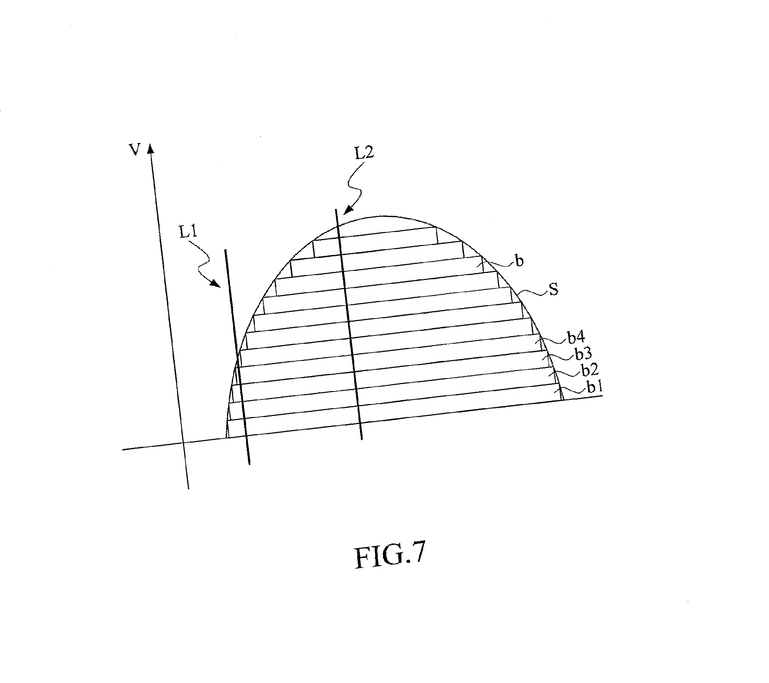

Referring now to FIG.7, a figure for explaining the relationship between a half sinusoidal voltage wave and the illumination of LED strings is illustrated. As shown, for the explanation purpose, the voltage is segmented thereinside into a plurality of rectangular voltage strips b1, b2, and so on. Each of the strips represents a voltage that can energize at least a fixed number (say one thereinafter for example) of in serial LEDs in the same LED string to illustrate. Namely, the strip voltage (height of the strip) is big enough to overcome the threshold voltage of one LED. In the voltage position of line L1, the instant voltage is qualified to illuminate each of the LED strings in parallel, any of whom includes a number of the in-serial LEDs no more than 4 (b1-b4). On the other hand, in L2, the instant voltage is sufficient to light up the LED strings that have 11 LEDs in series.

In addition, similar to the art, a tri-electrode AC switch can be included to follow the AC source for a phase-control purpose. Such an addition is well known to the art and thus details toward a real application would be omitted herein.

Accordingly, by providing an appropriate arrangement among the drive elements, the in-parallel LED strings, and number of the in-serial LEDs in each LED string of the present invention, the rectified voltage wave can be exhausted almost completely to energize an optimal number of the LED strings as well as the LEDs. Thereby, the power factor of the whole AC LED module can be maintained at a higher value.

While the present invention has been particularly shown and described with reference to a preferred embodiment, it will be understood by those skilled in the art that various changes in form and detail may be without departing from the spirit and scope of the present invention.

## Claims

1. An AC LED module with an improved power factor, coupled with an AC source having a first output port and a second output port, comprising:
a plurality of LED strings coupled in parallel between the first output
port and the second output port, each of the LED strings including thereof a respective number of LEDs connected in series; and
a plurality of connecting-to-middle drive elements, each of the
connecting-to-middle elements having two connection point, one thereof connected with any of the first output point and the second output point while another thereof being connected with a middle point between two consecutive said LEDs in the same LED string.

2. The AC LED module according to claim 1, further including a bridge rectifier unit coupled in parallel between said AC source and said a plurality of LED strings.

3. The AC LED module according to claim 2, wherein said bridge rectifier unit is composed of a plurality of diodes.

4. The AC LED module according to claim 2, wherein said bridge rectifier unit is composed of a plurality of LEDs.

5. The AC LED module according to claim 1, further, in one of said LED strings, including a drive element and a capacitor, the drive element being connected between said LED string and said first input port, the capacitor being connected between the drive element and said second input port in a manner of being parallel with said LED string.

6. The AC LED module according to claim 1, wherein, in one of said LED strings, said connecting-to-middle drive element is connected between said first input port and said middle point, further including a capacitor connected between said second input port and said middle point.

7. The AC LED module according to claim 1, wherein said connecting-to-middle drive element is a resistor.

8. The AC LED module according to claim 1, wherein said connecting-to-middle drive element is a capacitor.

9. The AC LED module according to claim 1, wherein said
connecting-to-middle drive element is a current regulative diode.

10. The AC LED module according to claim 1, wherein said
connecting-to-middle drive element is an inductor.

11. The AC LED module according to claim 1, wherein said
connecting-to-middle drive element is a current regulative IC.
